# EUROPEAN PATENT APPLICATION

(11) **EP 1 995 497 A1**
(43) Date of publication of application: **26.11.2008**
(21) Application number: 08009500.3
(22) Date of filing: 23.05.2008
(51) Int. Cl.: F16H 61/00

(54) **Oil supply system for motor vehicle**

(30) Priority: 25.05.2007 JP 2007138921
(71) Applicant: JTEKT Corporation, Osaka-shi Osaka 542-8502 (JP)
(72) Inventor: Yoshinami, Koudi, Osaka-shi Osaka 542-8502 (JP)
(74) Representative: Hager, Thomas Johannes

(57) **Abstract**

A oil supply system (58s) is provided for the CVT (46) of an automobile, and includes: a variable-transmission hydraulic controller, which employs hydraulic oil to adjust the actual gear ratio until the actual and the target gear ratios match; and a CVT controller (49), which transmits operation instructions to the variable-transmission hydraulic controller. The variable-transmission hydraulic controller includes a motor-driven oil pump (2), driven by an electric motor, for supplying hydraulic oil to the CVT. Based on an operation instruction transmitted by the CVT controller, the electric motor (3) is rotated either forward to increase the pressure of hydraulic oil to be supplied to the CVT, or rearward to reduce the pressure, so that the pressure of the hydraulic oil can be adjusted to obtain a required pressure value that is consonant with the operating state of the automobile.

## Description

### BACKGROUND OF THE INVENTION

The present invention relates to a oil supply system provided for a motor vehicle, such as an automobile, and relates particularly to a oil supply system that supplies hydraulic oil to an automatic transmission of the motor vehicle at a required flow rate based on the operating state of the motor vehicle.

A motor vehicle, such as an automobile, is equipped with a oil supply system that comprises: a variable-transmission hydraulic controller for controlling an automatic transmission by hydraulic oil in order to match the actual automatic transmission gear ratio with a target gear ratio; and a controller for transmitting operation instructions to the variable-transmission hydraulic control apparatus. According to the operating state of the motor vehicle, the oil supply system supplies the hydraulic pressure and the volume of oil required to produce an automatic transmission speed change.

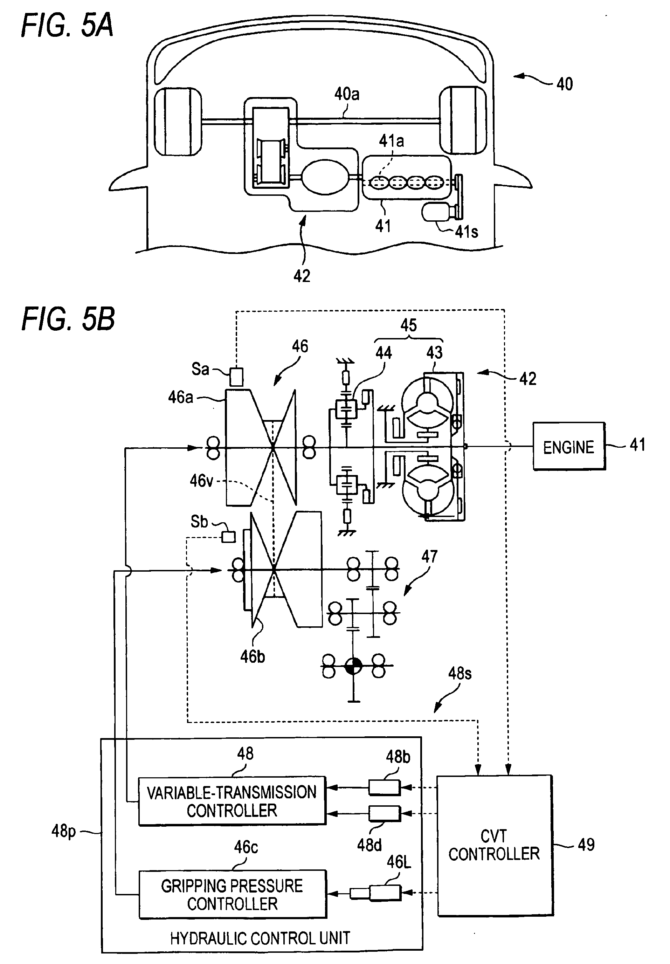

The general arrangement of an automobile mounting this oil supply system will now be described while referring to Figs. 5A and 5B.
An automobile 40 is provided with a belt type, Continuously Variable Transmission (CVT) that steplessly changes transmission gear ratio and that is employed mainly for Kei cars or K-cars (Japanese small automobile category) and compact automobiles. Referring to Fig. 5A, by rotating a rotary shaft (a crank shaft) 41a in an engine 41 of the automobile 40, a drive force generated by the engine 41 is transmitted to a front wheel axle 40a via a transaxle 42. Specifically, referring to Fig. 5B, the transaxle 42 includes: a drive force switching mechanism 45, constituted by a torque converter 43 and a forward/rearward switching device 44; a belt-type continuously variable transmission (hereinafter referred to as a CVT) 46 including a primary pulley 46a on the input side coupled with the drive force switching mechanism 45 for drive force transmission; and speed reduction gears 47 coupled with a secondary pulley 46b on the output side of the CVT 46. A V-belt 46v is wound around the primary pulley 46a and the secondary pulley 46b, and the drive force which is generated by the engine 41 is transmitted to the secondary pulley 46b through frictional force generated between the V-belt 46v and the pulleys 46a and 46b. Thereafter, since the secondary pulley 46b is connected to the front wheel axle 40a via the speed reduction gears 47, the drive force from the engine 41 is transmitted to the front wheel axle 40a. A starter 41s for starting the engine 41 is mounted in the automobile 40 shown in Figs. 5A and 5B.

Referring to Fig. 5B, a vehicular oil supply system 48s mounted in the automobile 40 includes: a variable-transmission hydraulic controller 48 which employs hydraulic oil to control the CVT 46 to match the actual gear ratio ν of the CVT 46 with a target ratio ν*; and a CVT controller 49 for transmitting control signals as operation instructions to the variable-transmission hydraulic controller 48.

The variable-transmission hydraulic controller 48 is provided for a hydraulic control unit 48p together with a gripping pressure controller 46c that uses hydraulic oil to control the belt gripping pressure at the secondary pulley 46b based on a predetermined gripping pressure control condition. The gripping pressure controller 46c is connected to the CVT controller 49 via a linear solenoid 46L, the operation of which is performed in accordance with control signals received from the CVT controller 49.

In the CVT controller 49, an input shaft rotation speed sensor Sa and an output shaft rotation speed sensor Sb are arranged for the primary pulley 46a and the secondary pulley 46b of the CVT 46, respectively. The CVT controller 49 receives, from these sensors Sa and Sb, sensor signals that represent rotation numbers Np and Ns obtained for the pulleys 46a and 46b, and calculates the actual gear ratio ν based on these sensor signals. Further, the CVT controller 49 compares the obtained gear ratio ν with a target gear ratio ν* calculated in advance based on vehicle speed and accelerator position, and calculates an oil pressure P [MPa] required by the primary pulley 46a to obtain a deviation Δν (= |ν* - ν|) between ν and ν* to be zero. Thus, the CVT controller 49 controls the operation of the variable-transmission hydraulic controller 48 to apply, to the primary pulley 46a, hydraulic oil of the oil pressure P [MPa] having the obtained required pressure value. Thereafter, in accordance with the thus obtained result, the variable transmission operation of the CVT 46 is performed.

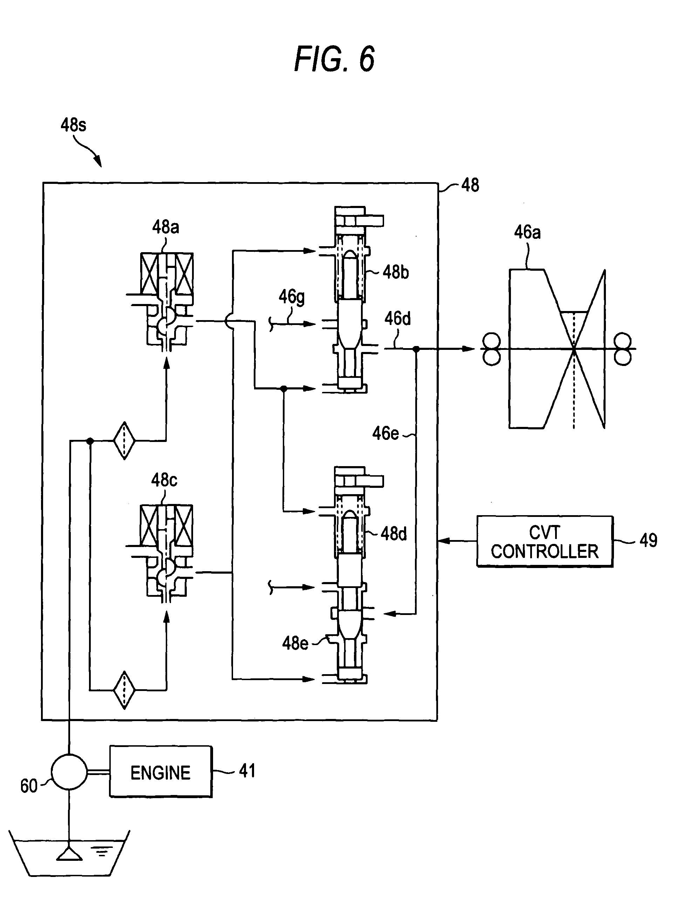

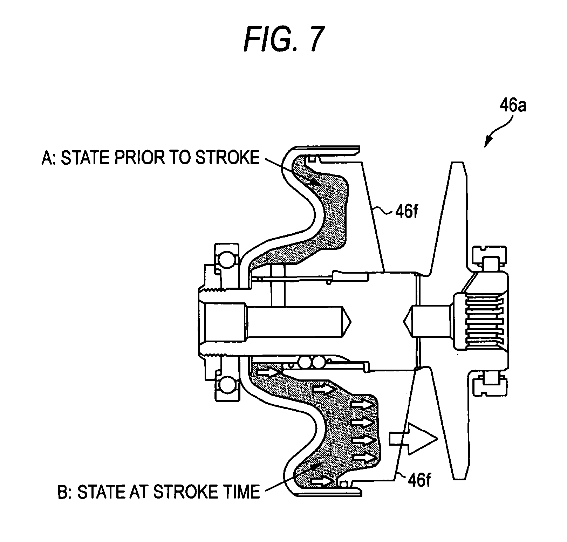

The variable-transmission hydraulic controller 48 will now be described in more derail with referring to Figs. 6 and 7. The variable-transmission hydraulic controller 48 includes: an electromagnetic switching valve 48a and a flow control valve 48b for an shift-up, which reduce the gear ratio v; and an electromagnetic switching valve 48c and a flow control valve 48d for a shift-down, which increase the gear ratio v. In the variable-transmission hydraulic controller 48, a mechanical hydraulic pump 60 is driven by the rotational force generated by the rotary shaft (crank shaft 41a) of the engine 41 (see Fig. 5A), and is always rotated at high speed based on the rotational speed of the engine 41. Thus, the mechanical hydraulic pump 60 serves as a hydraulic source for the speed change operation of the CVT 46.

When the CVT controller 49 controls the duty ratio of the shift-up electromagnetic switching valve 48a, a predetermined control pressure is output to the flow control valve 48b, and a line pressure adjusted based on the control pressure is supplied along a supply path 46d to the hydraulic cylinder of the primary pulley 46a. Thus, as indicated by B in Fig. 7, the width of a V-shaped groove 46f is narrowed, and the gear ratio ν is reduced. Then, when the CVT controller 49 also controls the duty ratio of the shift-down electromagnetic switching valve 48c, a predetermined control pressure is output to the flow control valve 48d, and under this control pressure, a drain port 48e is opened and hydraulic oil in the primary pulley 46a is drained off at a predetermined rate along a discharge path 46e. Thus, as indicated by A in Fig. 7, the width of the V-shaped groove 46f is extended, and the gear ratio ν is increased. Even in a case where the gear ratio ν is substantially constant and the supply of hydraulic oil to the primary pulley 46a is therefore not required, in order to prevent a change in the gear ratio ν due to the leakage of oil, the flow control valve 48b permits an oil line path 46g and the supply path 46d to communicate with each other in a predetermined flow area in cross section, and exert a predetermined oil pressure in this area (see, for example, JP-A-2001-330135).

As described above, according to the conventional oil supply system 48s, the CVT controller 49 provides hydraulic control (speed change control) for the pair of flow control valves 48b and 48d for an shift-up and a shift-down (in the variable-transmission hydraulic controller 48), in accordance with a vehicle speed and an accelerator position, thereby performing the speed change operation by the CVT 46.

In the conventional oil supply system 48s, for shift-downing, for example, the drain port 48e is opened and hydraulic oil in the primary pulley 46a is discharged at a predetermined flow rate along a discharge path 46e to reduce the oil pressure in the hydraulic cylinder of the primary pulley 46a. Therefore, based on the shift operation, the oil pressure is not quickly reduced and the variable transmission operation may not be smoothly performed. In addition, since the oil supply system 48s is employed for the CVT 46, the delay in the reduction of the oil pressure in the primary pulley 46a may cause V-belt 46v slippage, and a drive force loss may occur during the transmission of the drive force generated by the engine 41.

Furthermore, in the conventional oil supply system 48s, in order to ensure the appropriate operation of the pair of shift-up and shift-down flow control valves 48b and 48d, a relatively high oil pressure must always be supplied to these control valves 48b and 48d by the mechanical hydraulic pump 60 in consequence with the engine rotational speed. However, this indicates that a higher than necessary oil pressure will be applied to the variable-transmission hydraulic controller 48, especially in a high revolution range of the engine 41, and that there will also be a resultant loss in the drive force of the mechanical hydraulic pump 60.

### SUMMARY OF THE INVENTION

The present invention resolves the above described problems, and has as one objective the provision of a oil supply system that can rapidly supply, under a required pressure, the hydraulic oil that, based on a change in the operating state of a motor vehicle, is required by the automatic transmission of the motor vehicle, and that can perform a smooth variable transmission operation and reduce the drive force required to supply the hydraulic oil to the automatic transmission.

In order to achieve the object, the present invention provides the following arrangements.
(1) A oil supply system for an automatic transmission of a motor vehicle, comprising:
   a variable-transmission hydraulic controller that includes an electric motor and a motor-driven oil pump driven by the electric motor for supplying hydraulic oil to the automatic transmission for controlling a gear ratio for the automatic transmission to match the ratio with a target gear ratio; and
   a controller that transmits operation instruction to the variable-transmission hydraulic controller,
wherein, based on the operation instruction from the controller, the electric motor is rotated in a forward direction to increase a pressure to be applied to the hydraulic oil supplied to the automatic transmission and in a reverse direction to decrease the pressure so that a value for the hydraulic pressure is adjusted to a required pressure value according to the operating state of the vehicle.

(2) The oil supply system according to (1), wherein a rotational speed of a rotary shaft in an engine of the motor vehicle is employed as the operating state of the vehicle.

(3) The oil supply system according to (1), wherein an actual gear ratio for an automatic transmission is compared with a target gear ratio, and
when the target gear ratio is smaller than the actual gear ratio, the electric motor is rotated forward, and when the target gear ratio is greater than the actual gear ratio, the electric motor is rotated rearward until the actual gear ratio matches the target gear ratio.

(4) The oil supply system according to (1), wherein the automatic transmission is a belt-type continuously variable transmission that includes a primary pulley on an input side, and
a pressure value for hydraulic oil to be supplied to the primary pulley is adjusted to obtain the required pressure value by rotating the electric motor forward or rearward.

(5) The oil supply system according to (1), wherein the motor-driven oil pump includes an internal gear pump and the electric motor that drives the internal gear pump.

According to this arrangement, an electric motor that serves as a drive source for the motor-driven oil pump is rotated, in accordance with the operating state of the motor vehicle, forward to increase the pressure for the hydraulic oil to be supplied to the automatic transmission, or rearward to reduce the pressure. Therefore, when a low hydraulic pressure is required by the automatic transmission, the electric motor is rotated in the reverse direction, so that the pressure for the hydraulic oil to be supplied to the automatic transmission can be easily and rapidly reduced.

According to this arrangement, since the rotational speed of the rotary shaft in the vehicle engine is employed as the operating state of the motor vehicle, the oil pressure for the hydraulic oil to be supplied to the automatic transmission can be changed in accordance with the rotational speed, and can be adjusted to obtain an oil pressure (for the amount that must be supplied) required for the variable transmission operation of the automatic transmission.

According to this arrangement, the actual gear ratio, for the automatic transmission of the motor vehicle, and the target gear ratio are compared, and when the target gear ratio is smaller than the actual gear ratio, the electric motor is rotated forward, and when the target gear ratio is greater than the actual gear ratio, the electric motor is rotated rearward until the two ratios match. Therefore, the operation during which the oil pressure for hydraulic oil to be supplied to the automatic transmission can be adjusted to obtain the oil pressure required for the variable transmission operation of the automatic transmission can be performed more appropriately.

With this arrangement, since the pressure for hydraulic oil to be supplied to the primary pulley of the belt-type CVT is adjusted by rotating the electric motor forward or rearward, a required pressure value, consonant with the operating state of the motor vehicle, can be rapidly and precisely obtained for hydraulic oil to be supplied to the belt-type CVT.
With this arrangement, since the motor-driven oil pump includes the internal gear pump and the electric motor that drives the pump, this oil pump can superiorly maintain a constant flow rate, and a pulsating flow seldom occurs. As a result, a oil supply system can be provided that generates little noise during operation.

According to the oil supply system of this invention, in accordance with a change in the operating state of the motor vehicle, the hydraulic oil can be quickly supplied, at a pressure value required by the automatic transmission of the motor vehicle, and the variable transmission operation can be smoothly performed, and the drive force for supplying the hydraulic oil to the automatic transmission can be reduced.

### BRIEF DESCRIPTION OF THE DRAWINGS

Fig. 1 is a diagram illustrating the general arrangement of a oil supply system according to one embodiment of the present invention.
Fig. 2A is an axial cross sectional view of a motor-driven oil pump according to the embodiment; and Fig. 2B is an X-X cross sectional view of the motor-driven oil pump.
Fig. 3A is a map graph showing a relationship, for the oil supply system of the embodiment, between a rotation number Np (engine rotation speed) for a primary pulley employed for variable transmission operation of a belt-type variable transmission, and an oil quantity Qn required by the motor-driven oil pump; and Fig. 3B is a graph in which the horizontal axis represents a rotation number Np (input rotation number N) for a primary pulley and the vertical axis represents a discharge quantity characteristic for a pump.
Fig. 4 is a flowchart showing the operation of the oil supply system of the embodiment.
Fig. 5A is a diagram illustrating the essential structure of an automobile for which a vehicle driving assembly is applied; and Fig. 5B is a block diagram for the vehicle driving assembly.
Fig. 6 is a diagram illustrating the general arrangement of a conventional oil supply system.
Fig. 7 is a diagram showing the state in which the width of the V-shaped groove of the primary pulley of a belt-type automatic transmission is changed by operating the oil supply system.

### DETAILED DESCRIPTION OF PREFERRED EMBODIMENTS

One embodiment that carries out the present invention will now be described while referring to drawings.
A oil supply system according to the embodiment of the invention is mounted in an automobile (a motor vehicle) and on a vehicle driving assembly shown in Figs. 5A and 5B, unless a special explanatory note is given. Therefore, the reference numerals employed above are provided for corresponding components, and no further explanation for them will be given.

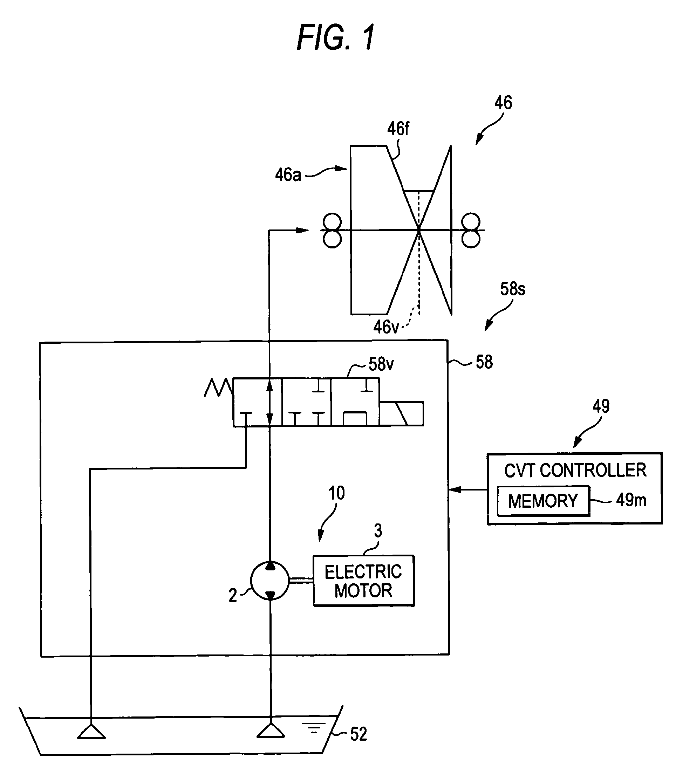

As shown in Fig. 1, a oil supply system 58s according to the embodiment includes: a variable-transmission hydraulic controller 58, which employs hydraulic oil to adjust a gear ratio ν for a CVT (an automatic transmission) 46 to a target gear ratio ν*; and a CVT controller 49 for transmitting operation instructions to the variable-transmission hydraulic controller 58.

The CVT controller 49 incorporates a memory 49m for storing map and an arithmetic expression in form of data and program. In the map and the arithmetic expression, an output value requested by a driver, such as the degree of depression of an accelerator pedal, and an operating state, such as a vehicle speed are used as parameters for setting the condition of the gear ratio (the vehicle speed corresponds to the rotational speed of a secondary pulley 46b).

The variable-transmission hydraulic controller 58 includes: a three-port electromagnetic switching valve (a control valve) 58v, through which hydraulic oil from a motor-driven oil pump 10 is supplied to a primary pulley 46a and which can select one of a path for circulating hydraulic oil from the primary pulley 46a via the motor-driven oil pump 10 to an oil pan 52, a path for halting the distribution of hydraulic oil, and a path for feeding hydraulic oil from the motor-driven oil pump 10 to the oil pan 52; and the motor-driven oil pump 10 which supplies hydraulic oil from the oil pan 52 via the electromagnetic switching valve 58v to the primary pulley 46a.

The motor-driven oil pump 10 in the embodiment includes: an internal gear pump (a pump portion) 2 which can supply hydraulic oil both to the primary pulley 46a and to the oil pan 52; and an electric motor 3 which drives the internal gear pump 2.

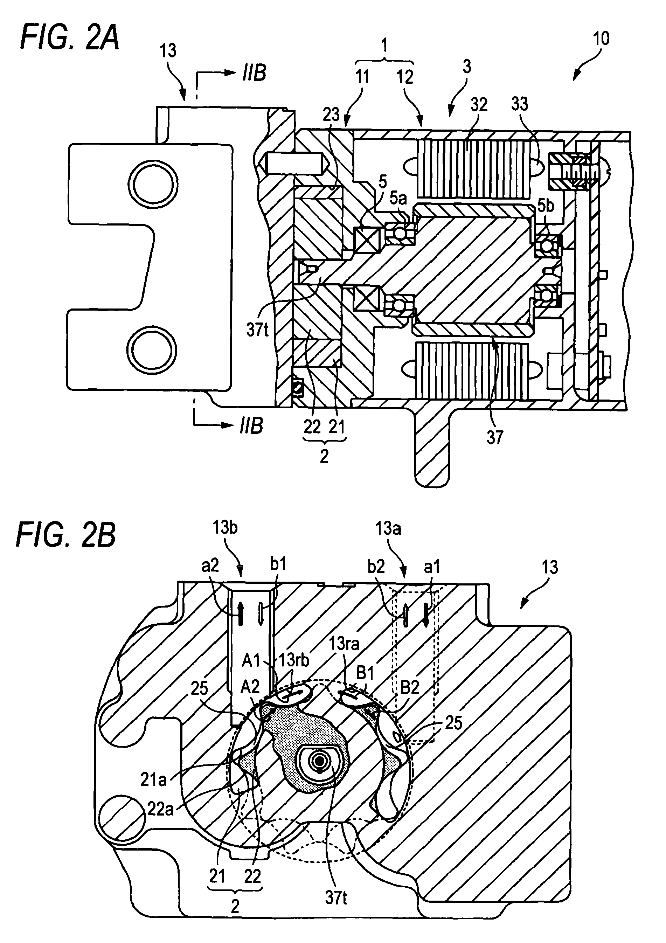

Specifically, referring to Figs. 2A and 2B, the motor-driven oil pump 10 includes a housing main body 1 that has an internal storage space and that is formed of a pump housing 11, in which the internal gear pump 2 is stored, and a motor housing 12, which is integrated with the pump housing 11 and in which the electric motor 3 is stored.

The internal gear pump 2 includes: an outer rotor 21, which has internal teeth of a Parachoid (registered trademark) type, and an inner rotor 22, which has external teeth of the same type and externally engages the outer rotor 21. When the two rotors 21 and 22 are rotated in the pump housing 11, the suction and discharge of oil is performed. In the pump housing 11, a cylindrical hollow portion in which the outer rotor 21 and the inner rotor 22 are stored is sealed with a pump plate 13, which is thick in the axial direction of the electric motor 3, so that a pump storage space 23 for the internal gear pump 2 is defined.

The electric motor 3 includes: a motor rotor 37, which permits the inner rotor 22 to pivot at a distal end 37t; and a stator core 32, which encloses the periphery of the motor rotor 37 and which rotates the motor rotor 37 by employing an electromagnetic force generated by energizing a coil 33. The motor rotor 37 is rotatably supported at the housing main body 1 by a first roller bearing 5a and a second roller bearing 5b.

As shown in Fig. 2B, the outer rotor 21 and the inner rotor 22 are rotated forward as indicated by arrows A1 and A2, or rearward as indicated by arrows B1 and B2. Further, arc shaped pump chambers 25 are formed between the tooth spaces 21a and 22a in the rotors 21 and 22, and as the rotors 21 and 22 are rotated either forward or rearward, a low pressure portion is formed on the intake side of the pump chambers 25, while a high pressure portion is formed on the output side of the pump chambers 25. Furthermore, a first crescent-shaped port 13ra and a second crescent-shaped port 13rb are formed in the pump plate 13 to communicate with the pump chambers 25, and a first port 13a and a second port 13b are also formed, to communicate with the first and the second ports 13ra and 13rb, respectively, and to be connected to external tubes.

When the two rotors 21 and 22 are rotated forward, hydraulic oil is drawn in through the first port 13a, in a direction indicated by an arrow a1, and is discharged from the second port 13b, in a direction indicated by an arrow a2. On the other hand, when the rotors 21 and 22 are rotated rearward, hydraulic oil is drawn in through the second port 13b, in a direction indicated by an arrow b1, and is discharged from the first port 13a, in a direction indicated by an arrow b2.

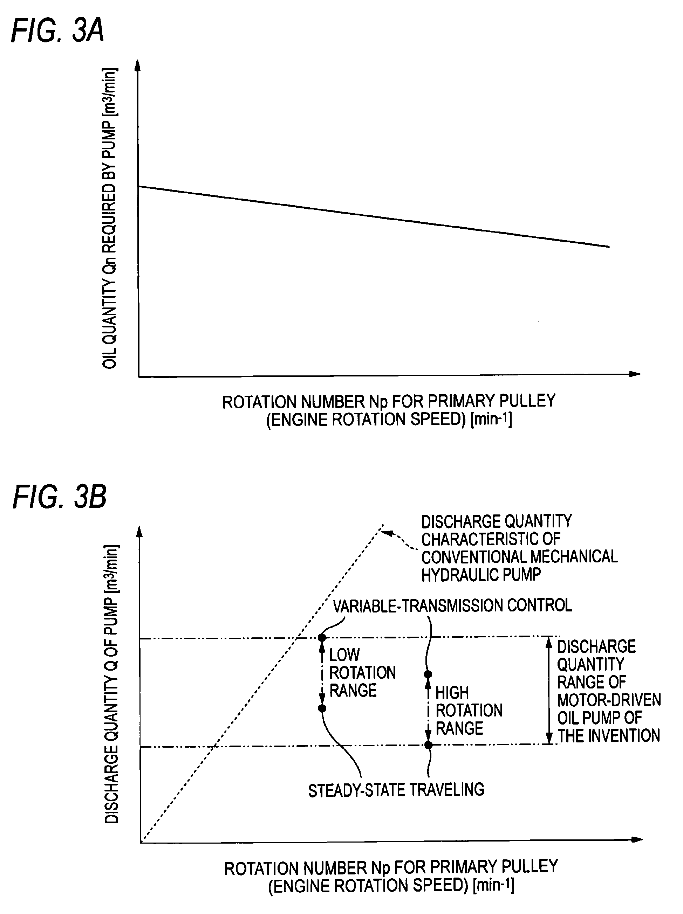

For the motor-driven oil pump 10 having this arrangement, the CVT controller 49 performs the program stored (with included data) in the memory 49m (see Fig. 1) and transmits an operation instruction from the CVT controller 49 to the variable-transmission hydraulic controller 58. Then, based on the operation instruction, the electric motor 3 controls the forward or rearward rotations of the rotors 21 and 22. At this time, the map data representing a relationship between a rotation number Np (an engine rotation speed) [min⁻¹], for the primary pulley 46a shown in Fig. 3A, and a required oil quantity Qn [m³/min], for the motor-driven oil pump 10, is stored in the memory 49m.

Specifically, when the target gear ratio ν* reaches the maximum, e.g., when the automobile 40 in Figs. 5A and 5B is started, a low oil pressure is required for the hydraulic oil supplied to the primary pulley 46a. Thus, the CVT controller 49 switches the electromagnetic switching valve 58v in Fig. 1 and rotates the electric motor 3 of the motor-driven oil pump 10 in the reverse direction, thereby providing a state in which the hydraulic oil returns from the primary pulley 46a to the oil pan 62, via the valve 58v and the motor-driven oil pump 10. Then, as shown in Fig. 7, the primary pulley 46a is set in the state existing prior to the stroke, i.e., a state A in which the width of the V-shaped groove 46f is extended to the maximum.

When, through the acceleration operation of the automobile 40, the rotational speed of the rotary shaft (the crank shaft 41a) of the engine 41 is increased and has reached the low or middle rotation range and a little higher oil pressure is requested for hydraulic oil for the primary pulley 46a, i.e., when there is a small reduction in the target gear ratio ν*, the CVT controller 49 controls the operation of the motor-driven oil pump 10 and the electromagnetic switching valve 58v. Then, the motor-driven oil pump 10 is rotated forward until the actual gear ratio ν matches the target gear ratio ν*, and a small quantity of hydraulic oil (low pressure) is supplied via the electromagnetic switching valve 58v shown in Fig. 1 to the primary pulley 46a of the CVT 46.

When, in accordance with the acceleration of the automobile 40, the rotational speed of the rotary shaft of the engine 41 is further increased and has reached a high rotation range, and a high oil pressure is requested for the hydraulic oil for the primary pulley 46a, i.e., when the target gear ratio ν* has become further smaller, the CVT controller 49 controls the operation of the motor-driven oil pump 10 and the electromagnetic switching valve 58v. Thus, the motor-driven oil pump 10 is rotated forward at high speed, so that the actual gear ratio ν matches the target gear ratio ν*, and a larger quantity (high pressure propelled) of hydraulic oil than in the low or middle range is supplied, via the electromagnetic switching valve 58v, to the primary pulley 46a of the CVT 46. As a result, as shown in Fig. 7, the stroke of the primary pulley 46a is increased, and a state B is provided in which the width of the V-shaped groove 46f is narrowed.

Thereafter, in accordance with the acceleration of the automobile 40, the rotation speed of the rotary shaft of the engine 41 is dropped and has reached a low or middle rotation range, and a little lower oil pressure is requested for the hydraulic oil supplied for the primary pulley 46a, i.e., when the target gear ratio ν* slightly exceeds the high rotation range, the CVT controller 49 controls the operation of motor-driven oil pump 10 and the electromagnetic switching valve 58v. Then, the motor-driven (by electric motor 3) oil pump 10 is rotated in the reverse direction, until the actual gear ratio ν matches the target gear ratio ν*, and a line pressure owing to the hydraulic oil, the pressure of which is below the high rotation range, is applied via the electromagnetic switching valve 58v in Fig. 1 to the primary pulley 46a of the CVT 46.

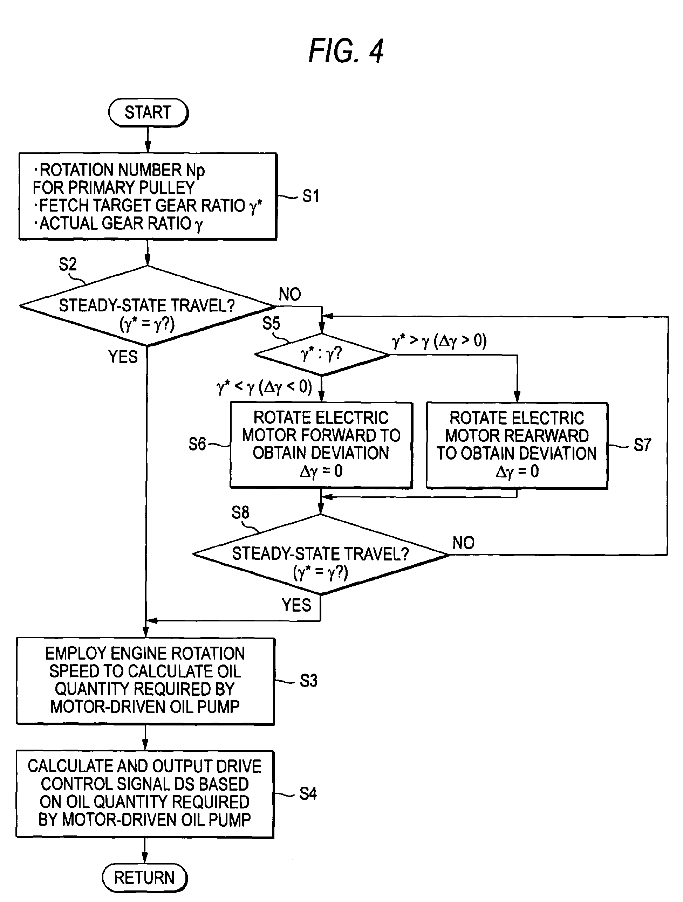

At this time, in accordance with the previously described program, the CVT controller 49 performs the processing shown in the flowchart in Fig. 4 as the timer interrupt processing every predetermined period of time (e.g., 10 msec), and controls the amount of hydraulic oil to be discharged from the motor-driven oil pump 10.

In this processing, first, at step S1, the rotation number Np for the primary pulley 46a, the target gear ratio ν* and the actual gear ratio ν are read. Then, at step S2, it is judged as to whether the actual gear ratio ν matches the target gear ratio ν*, and when it is determined that the target gear ratio ν* = the actual gear ratio ν (steady-state traveling), program control advances to step S3. On the other hand, when it is determined that the target gear ratio ν* # the actual gear ratio ν (unsteady-state traveling), program control advances to step S5.

At step S3, it is determined that the automobile 40 is traveling in the steady state and a comparatively small quantity of hydraulic oil is required. Thus, based on the map data in Fig. 3A, the quantity Qn [m³/min] of oil required by the motor-driven oil pump 10 is calculated based on the rotational speed of the rotary shaft of the engine 41, i.e., the rotation number Np for the primary pulley 46a.

On the other hand, at step S5, it is determined that the automobile 40 is traveling in the unsteady state, and the target gear ratio ν* and the actual gear ratio ν are compared. When the target gear ratio ν* < the actual gear ratio v, i.e., a deviation Δν < 0, at step S6, the electric motor 3 is rotated forward, in accordance with the deviation Δν, by a PID controller, for example, until the deviation Δν becomes zero.

When the target gear ratio ν* > the actual gear ratio v, i.e., the deviation Δν > 0, at step S7 the electric motor 3 is rotated rearward, in accordance with the target gear ratio ν*, by the PID control, for example, until the deviation Δν becomes zero. As described above, in the operating state of the automobile 40 where low pressure for hydraulic oil is requested by the CVT 46, the electric motor 3 need only be rotated in the reverse direction, so that the pressure of hydraulic oil to be supplied to the CVT 46 can be easily and rapidly reduced.

When a predetermined period has elapsed, at step S8, it is judged as to whether the actual gear ratio ν matches the target gear ratio ν* . When the target gear ratio ν* = the actual gear ratio ν (steady-state traveling), program control is shifted to step S3. When the target gear ratio ν* ≠ the actual gear ratio ν (non-steady-state traveling), program control is returned to step S5.

At step S4 following step S3, a drive control signal DS is calculated based on the oil quantity Qn required by the motor-driven oil pump 10, and is output to the variable-transmission hydraulic controller 58. Thereafter, the timer interrupt processing is terminated, and program control returns to the main program.

According to the oil supply system 58s of this embodiment, the following operating effects can be obtained.
(1) The electric motor 3 serving as a drive source for the motor-driven oil pump 10 is rotated, in accordance with the operating state of the automobile 40, either forward to increase the pressure for hydraulic oil to be supplied to the CVT 46, or rearward to reduce the pressure. Therefore, in the operating state of the automobile 40 where low pressure of hydraulic oil is requested by the CVT 46, the electric motor 3 need only be rotated in the reverse direction, so that the pressure of hydraulic oil to be supplied to the automatic transmission can be easily and rapidly reduced. As a result, as shown in the graph in Fig. 3B, in which the horizontal axis represents the rotation number Np [min⁻¹] of the primary pulley 46a (input rotation number Np [min⁻¹]) and the vertical axis represents the characteristic for the quantity discharged from the pump, the discharged quantity can be smaller than that for the conventional mechanical hydraulic pump 60, either in the low rotation range or in the high rotation range of the engine 41 and during the variable-transmission operation that requires higher oil pressure than in the steady-state traveling. Therefore, the total discharged quantity can be reduced by about 16 to 24%, compared with the conventional quantity.

(2) Since the rotational speed of the rotary shaft of the engine 41 is employed as the operating state of the automobile 40, the oil pressure of hydraulic oil to be supplied to the CVT 46 can be changed based on the rotation speed, and the oil pressure (necessary amount to be supplied) required for the variable transmission operation of the CVT 46 can be obtained.

(3) The target gear ratio ν* is compared with the actual gear ratio ν of the CVT 46, and when it is determined that the target gear ratio ν* < the actual gear ratio v, the electric motor 3 is rotated forward. When it is determined that the target gear ratio v* > the actual gear ratio v, the electric motor 3 is rotated rearward, until the two gear ratios match. Therefore, the oil pressure of hydraulic oil to be supplied to the CVT 46 can be more accurately adjusted to a pressure value required for the variable transmission operation.

(4) The pressure of hydraulic oil to be supplied to the primary pulley 46a of the CVT 46 is adjusted by rotating the electric motor 3 forward or rearward. As a result, the pressure of hydraulic oil to be supplied to the CVT 46 can be rapidly and exactly adjusted to a required pressure value according to the operating state of the automobile 40.

(5) Since the motor-driven oil pump 10 includes the internal gear pump 2 and the electric motor 3 that rotates the pump 10, this oil pump 10 is superior in maintaining a constant flow rate, and a pulsating flow rarely occurs. As a result, the oil supply system 58s that generates little noise during operation can be provided.

This embodiment may be modified as follows.
In the above embodiment, a belt-type continuously variable transmission has been employed as an automatic transmission that employs the oil supply system 58s to control oil pressure required for a variable transmission operation. However, the technical idea of this invention is not limited to this, and the present invention can also be applied for another type of automatic transmission in which, by rotating a motor-driven oil pump 10 (electric motor 3) forward or rearward, the pressure of hydraulic oil to be supplied to a automatic transmission can be rapidly and exactly adjusted to a required pressure value based on the operating state of a motor vehicle.

In the embodiment of this invention, the rotational speed of the rotary shaft of the engine 41 has been employed as the operating state of the automobile (motor vehicle) 40. However, the technical idea of the invention is not limited to this, and the vehicle velocity (rotation speed of wheels) of an automobile (motor vehicle) may be employed as the operating state of the automobile.

In the embodiment, the internal gear pump 2 has been employed as the pump portion of the motor-driven oil pump 10. However, another pump, such as an external gear pump, can also be employed.
In the embodiment, the motor-driven oil pump 10 has been rotated forward or rearward, and the pressure of hydraulic oil to be supplied to the automatic transmission has been rapidly and exactly adjusted to a required pressure value according to the operating state of the automobile 40. However, a motor-driven oil pump that can only be rotated forward may be employed. In this case, an electromagnetic switching valve switches between the intake side and the outlet side of this motor-driven oil pump to connect to the primary pulley 46a of the CVT 46, so that the same function as the forward and rearward rotating function can be provided.

## Claims

1. A oil supply system for an automatic transmission of a vehicle, comprising:
a variable-transmission hydraulic controller that includes an electric motor and a motor-driven oil pump driven by the electric motor for supplying hydraulic oil to the automatic transmission for controlling a gear ratio for the automatic transmission to match the ratio with a target gear ratio; and
a controller that transmits operation instruction to the variable-transmission hydraulic controller,
wherein, based on the operation instruction from the controller, the electric motor is rotated in a forward direction to increase a pressure to be applied to the hydraulic oil supplied to the automatic transmission and in a reverse direction to decrease the pressure so that a value for the hydraulic pressure is adjusted to a required pressure value according to the operating state of the vehicle.

2. The oil supply system according to claim 1, wherein a rotational speed of a rotary shaft in an engine of the vehicle is employed as the operating state of the vehicle.

3. The oil supply system according to claim 1, wherein
an actual gear ratio for the automatic transmission is compared with a target gear ratio, and
when the target gear ratio is smaller than the actual gear ratio, the electric motor is rotated forward, and when the target gear ratio is greater than the actual gear ratio, the electric motor is rotated rearward until the actual gear ratio matches the target gear ratio.

4. The oil supply system according to claim 1, wherein
the automatic transmission is a belt-type continuously variable transmission that includes a primary pulley on an input side, and
a pressure value for hydraulic oil to be supplied to the primary pulley is adjusted to obtain the required pressure value by rotating the electric motor forward or rearward.

5. The oil supply system according to claim 1, wherein the motor-driven oil pump includes an internal gear pump and the electric motor that drives the internal gear pump.
